(19) Europäisches Patentamt
European Patent Office
Office européen des brevets

(11) **EP 3 060 700 B1**

(12) **FASCICULE DE BREVET EUROPEEN**

(45) Date de publication et mention de la délivrance du brevet:
**03.07.2019 Bulletin 2019/27**

(51) Int Cl.:
*C25B 1/04* (2006.01)   *C25B 9/20* (2006.01)
*C25B 9/00* (2006.01)   *C25B 15/02* (2006.01)
*H01M 8/04* (2016.01)

(21) Numéro de dépôt: **14805972.8**

(22) Date de dépôt: **22.10.2014**

(86) Numéro de dépôt international:
**PCT/FR2014/052678**

(87) Numéro de publication internationale:
**WO 2015/059404 (30.04.2015 Gazette 2015/17)**

(54) **PILOTAGE D'UN ÉLECTROLYSEUR À HAUTE TEMPÉRATURE**

STEUERUNG EINES HOCHTEMPERATUR-ELEKTROLYSEURS

CONTROL OF A HIGH-TEMPERATURE ELECTROLYZER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2013 FR 1360471**

(43) Date de publication de la demande:
**31.08.2016 Bulletin 2016/35**

(73) Titulaire: **Electricité de France**
**75008 Paris (FR)**

(72) Inventeurs:
• **PETIPAS, Floriane**
**75015 Paris (FR)**
• **BRISSE, Annabelle**
**F-67850 Herlisheim (FR)**
• **BOUALLOU, Chakib**
**F-92160 Antony (FR)**

(74) Mandataire: **Cabinet Plasseraud**
**66, rue de la Chaussée d'Antin**
**75440 Paris Cedex 09 (FR)**

(56) Documents cités:
WO-A1-2012/153230   DE-A1-102004 045 375
JP-A- 2007 046 110   US-A1- 2009 325 014
US-A1- 2010 140 102

• WANG Z ET AL: "Steam electrolysis performance of intermediate-temperature solid oxide electrolysis cell and efficiency of hydrogen production system at 300 Nm<3> h<-1>", INTERNATIONAL JOURNAL OF HYDROGEN ENERGY, ELSEVIER SCIENCE PUBLISHERS B.V., BARKING, GB, vol. 35, no. 10, 23 mars 2010 (2010-03-23), pages 4451-4458, XP027028427, ISSN: 0360-3199 [extrait le 2010-04-24]
• QUANDT K H ET AL: "Concept and design of a 3.5 MW pilot plant for high temperature electrolysis of water vapor", INTERNATIONAL JOURNAL OF HYDROGEN ENERGY, ELSEVIER SCIENCE PUBLISHERS B.V., BARKING, GB, vol. 11, no. 5, 1986, pages 309-315, XP025414067, ISSN: 0360-3199, DOI: 10.1016/0360-3199(86)90149-7 [extrait le 1986-01-01]
• CHRISTOPHER GRAVES ET AL: "Co-electrolysis of CO2 and H2O in solid oxide cells: Performance and durability", SOLID STATE IONICS, vol. 192, no. 1, 16 juillet 2010 (2010-07-16), pages 398-403, XP055066282, ISSN: 0167-2738, DOI: 10.1016/j.ssi.2010.06.014
• S. DIETHELM ET AL: "Electrolysis and Co-Electrolysis Performance of SOE Short Stacks", FUEL CELLS, vol. 13, no. 4, 30 juillet 2013 (2013-07-30), pages 631-637, XP055126666, ISSN: 1615-6846, DOI: 10.1002/fuce.201200178

EP 3 060 700 B1

- SCHILLER G ET AL: "High temperature water electrolysis using metal supported solid oxide electrolyser cells (SOEC)", JOURNAL OF APPLIED ELECTROCHEMISTRY, KLUWER ACADEMIC PUBLISHERS, DO, vol. 39, no. 2, 7 October 2008 (2008-10-07), pages 293-301, XP019677907, ISSN: 1572-8838

**Description**

Domaine technique

La présente demande concerne le domaine technique des électrolyseurs à haute température. Plus particulièrement, il est question du domaine technique des procédés de pilotage de tels électrolyseurs, en particulier pour la production d'hydrogène et ou du gaz de synthèse (aussi appelé syngas). Il est également question d'un système de pilotage de tels électrolyseurs et d'un système de production comprenant un tel système de pilotage.

État de la technique

L'hydrogène est considéré aujourd'hui comme une ressource énergétique prometteuse. Malheureusement, son application se heurte à des difficultés de production. En effet, les rendements de la production industrielle d'hydrogène, notamment à partir de l'eau moins polluant que la production à partir d'hydrocarbures, sont encore insatisfaisants.

Néanmoins, certaines méthodes sont encourageantes, comme l'électrolyse à haute température (HTE, d'après l'anglais « *High-temperature electrolysis* »). L'HTE consiste à électrolyser de la vapeur d'eau à une température de 500°C à 1 000°C grâce à l'apport d'énergie électrique à l'aide d'un électrolyseur à haute température. Un tel électrolyseur comprend une pluralité de cellules. Chaque cellule comprend une cathode poreuse et une anode poreuse, ainsi qu'un électrolyte imperméable aux gaz. L'électrolyte est disposé en contact avec la cathode et l'anode et entre celles-ci. Une tension est appliquée entre la cathode et l'anode. Un flux de vapeur d'eau est dirigé vers la cathode. La tension appliquée provoque le craquage de l'eau : l'eau est transformée en hydrogène et en oxygène. L'hydrogène est dégagé du côté de la cathode alors que l'oxygène est dégagé du côté de l'anode :

$$\text{réduction à la cathode :} \quad 2\,H^+ + 2\,e^- \rightarrow H_2 \text{ ;}$$
$$\text{oxydation à l'anode :} \quad 2\,H_2O \rightarrow O_2 + 4\,H^+ + 4\,e^- \text{ ;}$$
$$\text{réaction globale :} \quad 2\,H_2O \rightarrow 2\,H_2 + O_2.$$

L'énergie globale nécessaire pour permettre cette réaction peut être apportée par l'énergie électrique provenant d'une source électrique telle qu'une centrale électrique et/ou par l'énergie thermique provenant d'une source de chaleur.

La réaction d'électrolyse en elle-même est une réaction endothermique. Ainsi, si l'apport en énergie électrique est insuffisant pour couvrir les besoins à la fois électriques et thermiques (via l'effet Joule ayant lieu à l'intérieur du ou des empilements de cellules), la réaction d'électrolyse va puiser de l'énergie thermique dans les gaz qui traversent les cellules, ce qui aboutit à une chute de température à l'intérieur de l'enceinte dans laquelle sont disposées les cellules : c'est le mode endothermique du fonctionnement.

Des solutions existent pour faire fonctionner un électrolyseur à haute température en mode endothermique. Par exemple le document WO2013/060869 décrit un procédé de gestion thermique d'un électrolyseur à haute température, dans lequel de l'énergie est emmagasinée par des moyens de stockage d'énergie lors d'une phase de fonctionnement exothermique de l'électrolyseur (c'est-à-dire que l'apport en énergie électrique est supérieur aux besoins de la réaction d'électrolyse), par exemple à 1,5 V, lorsque le prix de l'énergie électrique est bas, et dans lequel cette énergie emmagasinée est restituée sous forme de chaleur lors d'une phase de fonctionnement endothermique de l'électrolyseur, par exemple à 1,2 V, lorsque le prix de l'énergie électrique est élevé.

Cette solution est satisfaisante lorsque l'électrolyseur est relié à une source électrique qui produit suffisamment d'énergie. Le cycle mode exothermique/mode endothermique, c'est-à-dire la durée du mode exothermique et la durée du mode endothermique, est déterminé par l'opérateur qui peut par conséquent choisir les moyens de stockage adapté à ce cycle.

L'HTE en combinaison avec une source d'énergie électrique renouvelable, tel que l'éolien, l'hydrolien, le solaire, l'hydraulique, la géothermie, etc., pourrait permettre la production d'hydrogène à partir de sources d'énergie renouvelable. Malheureusement, les sources d'énergie électrique renouvelable sont généralement des sources intermittentes et/ou fluctuantes ne permettant pas une production d'électricité continue, constante et prédictible.

Par conséquent, le procédé du document WO2013/060869 ne peut être utilisé que partiellement dans un tel cas.

Par ailleurs, l'électrolyseur comprend des éléments qui sont sensibles aux gradients thermiques, c'est-à-dire à une différence de température entre deux points du ou des empilements de cellules. Une variation excessive de température entre différents points de l'électrolyseur peut détériorer ces éléments, voire conduire à leur destruction.

Ainsi, dans le cas où l'électrolyseur est alimenté par une source d'énergie électrique renouvelable, il est possible que l'énergie fournie soit extrêmement déficitaire. L'électrolyse puise alors l'énergie manquante dans l'environnement où elle a lieu, c'est-à-dire dans la chaleur emmagasinée dans l'enceinte, conduisant à l'apparition de gradients thermiques à l'intérieur de l'enceinte. Ces gradients thermiques peuvent aller au-delà de 50°C/cm.

Le document FR2921390 apporte une solution pour gérer les gradients thermiques dans le ou les empilements de cellules constituant les électrolyseurs à haute température. La solution choisie consiste à faire circuler de la vapeur d'eau à l'intérieur du ou des empilements de cellules via des conduits indépendants afin d'homogénéiser la température avant de la diriger vers les cathodes. En mode exothermique, la chaleur excédentaire est donc évacuée via une circulation de la vapeur d'eau ayant une température inférieure à la température des cellules. En mode endothermique, la chaleur déficitaire est apportée via une circulation de la vapeur d'eau ayant une température supérieure à la température des cellules. Cette solution ne peut être mise en place en mode endothermique que si une source de vapeur à très haute température est disponible.

Cette solution a pour inconvénient qu'elle nécessite de prévoir un circuit de fluide pour conduire la vapeur à travers les différentes cellules de l'électrolyseur. Ainsi, cette solution est architecturalement complexe. Par ailleurs, quand la puissance fournie par la source d'énergie est fortement déficitaire (mode endothermique), une source de chaleur à très haute température doit être disponible pour couvrir les besoins thermiques de la réaction.

Le document US 2009/0325014 propose une solution pour gérer les gradients thermiques dans un empilement de cellules en ajustant la concentration de réactifs en fonction de la puissance fournie par la source d'énergie.

Ainsi, les solutions de l'art antérieur nécessitent encore d'être améliorées afin de pouvoir proposer un procédé permettant de faire fonctionner un électrolyseur à haute température alimenté en électricité par une source d'énergie intermittente et notamment une source d'énergie renouvelable.

Présentation de l'invention

Comme il a été précisé ci-dessus, un objectif de la présente invention est de pallier au moins un inconvénient de l'art antérieur décrit ci-dessus.

Pour cela, la présente invention propose un procédé de pilotage d'un électrolyseur à haute température tel que revendiqué comprenant un ou plusieurs empilements de cellules, le ou les empilements de cellules étant disposés dans une enceinte préalablement chauffée à haute température et isolée thermiquement, l'électrolyseur étant relié à une source d'énergie électrique pour son alimentation en puissance afin de réaliser une réaction d'électrolyse, le procédé comprenant :

- la surveillance de la puissance fournie par la source d'énergie ;
- la déviation en amont de l'électrolyseur d'une partie de la puissance fournie par la source d'énergie pour le chauffage du ou des empilements de cellules, lorsque la valeur de la puissance fournie devient inférieure à une valeur limite préalablement déterminée ;
- pas de déviation sinon,

dans lequel la valeur limite préalablement déterminée est choisie comme la valeur de la puissance à laquelle apparaissent des gradients de température à l'intérieur de l'enceinte supérieurs en valeur absolue à 50°C/cm.

Grâce à un tel procédé, et comme il sera expliqué plus en détail ci-dessous, une partie de l'énergie apportée à l'électrolyseur est, dans certaines conditions, sous forme thermique et sa portion est directement dépendante de l'alimentation fournie par la source d'énergie. Ainsi, il est possible de faire fonctionner l'électrolyseur dans une large gamme de puissances.

D'autres caractéristiques optionnelles et non limitatives sont :

- les cellules de l'électrolyseur ayant une surface S, la distance entre l'entrée des gaz et la sortie des gaz dans une cellule étant L, la valeur limite $P_{min}$ par cellule est choisie égale à :

$$P_{min} = E(T_{min}) \cdot j(T_{min}) \cdot S \ ;$$

avec :

$$T_{min} = T_{eau} - \frac{L \cdot \Delta T}{2} \ ;$$

$$E(T) = E_N(T) + j(T) \cdot ASR \ ;$$

$$E_N(T) = \frac{\Delta_r G^0(T)}{2 \cdot F} + \frac{R \cdot T}{2 \cdot F} \cdot \ln\left(\frac{SC/2}{1 - SC/2}\right) \; ;$$

$$\dot{j}(T) = \frac{A(T)}{2 \cdot F \cdot ASR} - \frac{E_N(T)}{ASR} \; ;$$

$$A(T) = \frac{L \cdot \Delta T}{2} \cdot \left( c_{p_{H2}}(2T - T_{eau}) + \frac{c_{p_{O2}}(2T - T_{eau})}{2} - \frac{c_{p_{H2O}}(T_{eau})}{SC} \right) + \Delta_r H(T) \; ;$$

où $T_{eau}$ la température de la vapeur d'eau entrant au niveau de la cathode ; $\Delta T$ le gradient de température maximal tolérable ; $c_{p_{H2}}$ la capacité thermique de l'hydrogène à pression constante ; $c_{p_{O2}}$ la capacité thermique de l'oxygène à pression constante ; $c_{p_{H2O}}$ la capacité thermique de l'eau à pression constante ; $\Delta_r H$ l'enthalpie de réaction de l'électrolyse de l'eau ; $\Delta_r G°$ l'enthalpie libre de réaction de l'électrolyse ; SC le taux de conversion de l'eau en hydrogène ; ASR la résistance spécifique de surface de ou des empilements de cellules ; F la constante de Faraday et R la constante des gaz parfaits ;

- la puissance déviée par cellule $P_{dév}$ peut être obtenue par itération des équations suivantes jusqu'à convergence en considérant comme valeurs initiales $P_{dév,0} = 0$ et $P_0 = P_{source}$, P étant la partie de la puissance appliquée à l'électrolyseur et $P_{source}$ la puissance fournie par la source d'énergie électrique :

$$P_{dév,m+1} = A(T_{min}) \cdot \dot{n}_m(T_{min}) - P_m \; ;$$

avec :

$$\dot{n}_m(T) = \frac{S}{2 \cdot F} \cdot \left( -\frac{E_N(T)}{2 \cdot ASR} + \sqrt{\frac{P_m}{S \cdot ASR} + \left(\frac{E_N(T)}{2 \cdot ASR}\right)^2} \right) \; ;$$

$$P_m = P_{source} - P_{dév,m} \; ;$$

avec $m \geq 0$ (m supérieur ou égale à 0) (m marquant le rang de l'itération) ;

- L étant la distance entre l'entrée et la sortie des gaz dans une cellules, la vapeur d'eau entrant du côté des cathodes étant à une température de $T_{eau}$ et $\Delta T$ représentant le gradient de température maximal tolérable, alors la valeur limite de la puissance en-deçà de laquelle la déviation est mise en place est égale à la puissance pour laquelle la température $T_{sortie}$ des gaz en sortie du ou des empilements est égale à :

$$T_{sortie} = T_{eau} - \Delta T \cdot L \; ;$$

- la source d'énergie électrique est une source d'énergie intermittente et/ou fluctuante ; et
- la source d'énergie est une source d'énergie renouvelable.

L'invention propose également un procédé de production d'hydrogène ou de syngas comprenant les étapes de :

- préchauffage à une haute température d'une enceinte isolée thermiquement dans laquelle le ou les empilements d'un électrolyseur à haute température sont disposés ;
- alimentation de l'électrolyseur en puissance à partir d'une source d'énergie électrique ;

- mise en circulation d'eau jusqu'aux cathodes de l'électrolyseur pour réaliser une réaction d'électrolyse ;
- pilotage de l'électrolyseur tel que décrit ci-dessus ;
- la récupération de l'oxygène généré par la réaction d'électrolyse au niveau des anodes ;
- la récupération de l'hydrogène généré par la réaction d'électrolyse au niveau des cathodes et éventuellement du monoxyde de carbone dans le cas de la production de syngas.

Puisque les gradients thermiques peuvent être évités même à très faible puissance, il est possible de faire fonctionner un électrolyseur à haute température alimenté par une source d'énergie renouvelable qui par essence est une source d'énergie intermittente et/ou fluctuante avec des périodes de production d'énergie faible et produire de l'hydrogène de préférence de manière écologique.

Cependant, la présente invention n'est pas limitée à la production d'hydrogène par une énergie renouvelable, et l'utilisation de tout type de centrale électrique quelle que soit sa filière pour l'alimentation de l'électrolyseur est également envisageable.

L'invention propose également un système de pilotage d'un électrolyseur à haute température tel que revendiqué comprenant un ou plusieurs empilements de cellules disposés dans une enceinte préalablement chauffée à une haute température, isolée thermiquement, l'électrolyseur étant alimenté par une source d'énergie, comprenant :

- une chauffe à relier à la source d'énergie pour son alimentation en puissance et à disposer au voisinage du ou des empilements de cellules pour le chauffage de celui-ci ou de ceux-ci ;
- un commutateur à disposer entre la source d'énergie et la chauffe pour la coupure ou le réglage de l'alimentation de celle-ci ;
- un contrôleur à relier à la source d'énergie pour le suivi de la puissance fournie par celle-ci et connecté au commutateur pour la commande de celui-ci.

Enfin, l'invention propose un système pour la production d'hydrogène ou de syngas comprenant :

- un électrolyseur à haute température ;
- une source d'énergie reliée à l'électrolyseur pour l'alimentation de l'électrolyseur en puissance ;
- une enceinte isolée thermiquement dans laquelle le ou les empilements de cellules de l'électrolyseur sont disposés ; et
- un système de pilotage de l'électrolyseur tel que décrit ci-dessus.

Dessins

D'autres objectifs, caractéristiques et avantages apparaitront à la lecture de la description détaillée qui suit en référence aux dessins donnés à titre illustratif et non limitatif, parmi lesquels :

- la figure 1 est une illustration schématique d'un exemple de système de production d'hydrogène et/ou de syngas selon l'invention ;
- la figure 2 est une illustration schématique du système de la figure 1 avec le système de pilotage détaillé ;
- la figure 3 est une illustration schématique et détaillée de l'électrolyseur à haute température utilisé dans le système de la figure 1 ;
- la figure 4 est un diagramme représentant les étapes d'un exemple de procédé de pilotage selon l'invention ;
- la figure 5 est un diagramme représentant de manière schématique les étapes d'un exemple de procédé de production d'hydrogène utilisant le procédé de pilotage de la figure 4 ;
- la figure 6a est un graphe montrant la charge appliquée à l'électrolyseur et à la chaufferette électrique en fonction de la charge provenant de la source électrique ;
- la figure 6b est un agrandissement de la figure 6a ; et
- la figure 7 est un graphe montrant, en fonction de la charge provenant de la source électrique, le rendement sur PCS de l'électrolyseur, c'est-à-dire en prenant en compte les composants auxiliaires (notamment le chauffage de l'eau liquide de la température ambiante jusqu'à 800°C et la compression de l'hydrogène de la pression atmosphérique jusqu'à 30 bar) et la température moyenne de l'enceinte.

Description

Dans toute la description qui suit, il est fait mention de la puissance à apporter à un électrolyseur à haute température. Cependant, la puissance est parfois difficile à régler directement, c'est pourquoi il est parfois préférable de régler la tension ou le courant apporté aux bornes de l'électrolyseur. L'homme du métier n'éprouvera aucune difficulté à adapter l'enseignement de l'exposé suivant à un réglage de la tension ou du courant au lieu de la puissance. On comprendra alors que les modes de réalisation où la tension ou le courant apporté aux bornes de l'électrolyseur est pris en compte plutôt que la puissance font partie intégrante de la présente invention.

Par ailleurs, dans toute la description qui suit, les systèmes et les procédés sont décrits en relation avec la production d'hydrogène. Cependant, les systèmes et les procédés décrits permettent aussi la production de syngas par co-électrolyse. Cet objectif fait partie intégrante de la présente invention et l'homme du métier saura adapter la description ci-dessous à ce type de production, notamment en introduisant en entrée des cathodes de la vapeur d'eau mélangée à du dioxyde de carbone ($CO_2$), les gaz produits émanant des cathodes sont alors l'hydrogène et le monoxyde de carbone (CO).

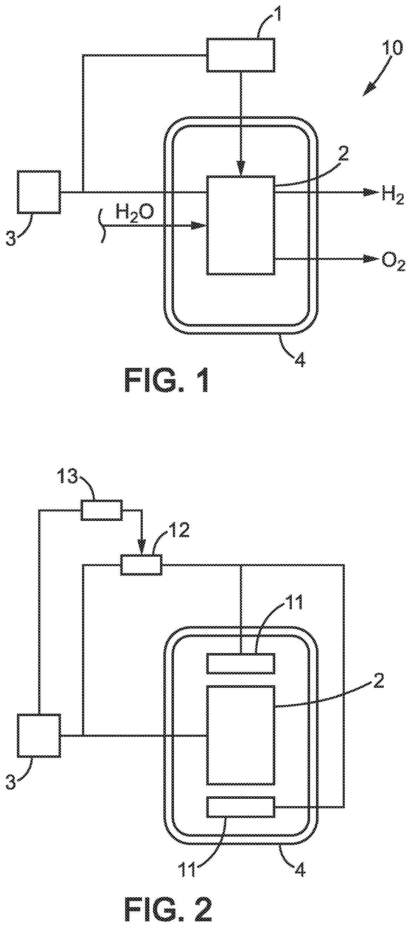

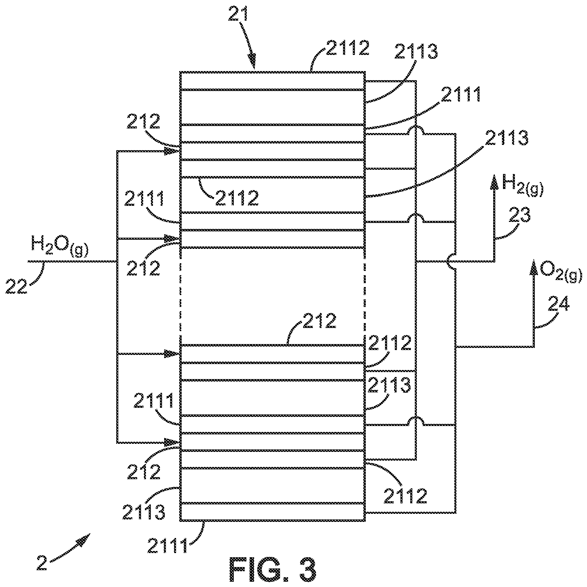

Un système de production d'hydrogène selon l'invention est décrit ci-après en référence aux figures 1 à 3.

Ce système **10** de production d'hydrogène comprend un électrolyseur **2** à haute température, une source **3** d'énergie, une enceinte **4**, et un système **1** de pilotage de l'électrolyseur. L'électrolyseur **2** comprend au moins un empilement **21** de cellules. Chaque cellule comprend une cathode **2112** poreuse, une anode **2111** poreuse et un électrolyte **2113** disposé entre la cathode **2112** et l'anode **2111** et en contact avec celles-ci. La cathode **2112**, l'anode **2111** et l'électrolyte **2113** sont par exemple en métal ou en céramique, de préférence en céramique. Deux cellules sont séparées entre elles par une plaque bipolaire **212**, encore appelée interconnecteur. L'interconnecteur **212** est conducteur d'électricité et comprend des canaux de circulation de fluide (non représentés sur les dessins).

L'électrolyseur comprend également des composants auxiliaires, parmi lesquels au moins un conduit **22** d'amenée de vapeur d'eau est prévu pour conduire de la vapeur d'eau jusque dans les canaux des interconnecteurs. Il est également prévu un conduit **23** d'évacuation et de collecte d'hydrogène pour extraire l'hydrogène formé au niveau des cathodes par l'électrolyse hors de celles-ci, et un conduit **24** d'évacuation d'oxygène pour conduire l'oxygène formé au niveau des anodes hors de celles-ci. D'autres composants auxiliaires sont également prévus, notamment une chauffe pour chauffer les gaz d'entrée (comprenant éventuellement un ou plusieurs échangeurs de chaleur), et sont connus de l'homme du métier ; ainsi ils ne sont pas décrits ici pour des raisons de concision.

La source **3** d'énergie est reliée à l'électrolyseur **2** à haute température pour son alimentation en puissance. La source **3** d'énergie est ici une source d'énergie électrique, par exemple choisie parmi : une éolienne, un ensemble d'éoliennes, une hydrolienne, un ensemble d'hydroliennes, un panneau solaire, un ensemble de panneaux solaires, une centrale géothermique, une centrale thermique, une centrale nucléaire, et une centrale hydraulique.

De préférence, la source **3** d'énergie est une source d'énergie électrique renouvelable. Par exemple, la source d'énergie est choisie parmi : une éolienne, un ensemble d'éoliennes, une hydrolienne, un ensemble d'hydroliennes, un panneau solaire, un ensemble de panneaux solaires, une centrale géothermique et une centrale hydraulique, sans que cette liste soit limitative.

L'enceinte **4** est formée d'un isolant thermique pouvant supporter de hautes températures, typiquement jusqu'à 1 000° C. Le ou les empilements de l'électrolyseur sont disposés à l'intérieur de cette enceinte pour minimiser les pertes thermiques. Une chauffe **11** peut être prévue pour le chauffage préalable de l'enceinte avant la mise en fonctionnement de l'électrolyseur.

Le système **1** de pilotage est relié à l'électrolyseur **2** et à la source **3** d'énergie. Le système **1** de pilotage comprend une chauffe **11,** un commutateur **12** et un contrôleur **13.**

La chauffe **11** est reliée à la source **3** d'énergie pour sa propre alimentation en puissance et est disposée au voisinage du ou des empilements de cellules. La chauffe **11** permet le chauffage du ou des empilements de cellules de l'électrolyseur par effet Joule et plus particulièrement de chacune des cellules composant le ou les empilements.

La chauffe **11** peut être composée d'une ou de plusieurs résistances électriques disposées au sein de (par exemple intégrées aux interconnecteurs) ou autour du ou des empilements de cellules.

Le commutateur **12** est disposé entre la source **3** d'énergie et la chauffe **11** pour la coupure ou le réglage de l'alimentation de celle-ci.

Le contrôleur **13** est relié à la source **3** d'énergie pour le suivi de la puissance fournie par celle-ci et connecté au commutateur **12** pour la commande de celui-ci en fonction de la puissance fournie mesurée.

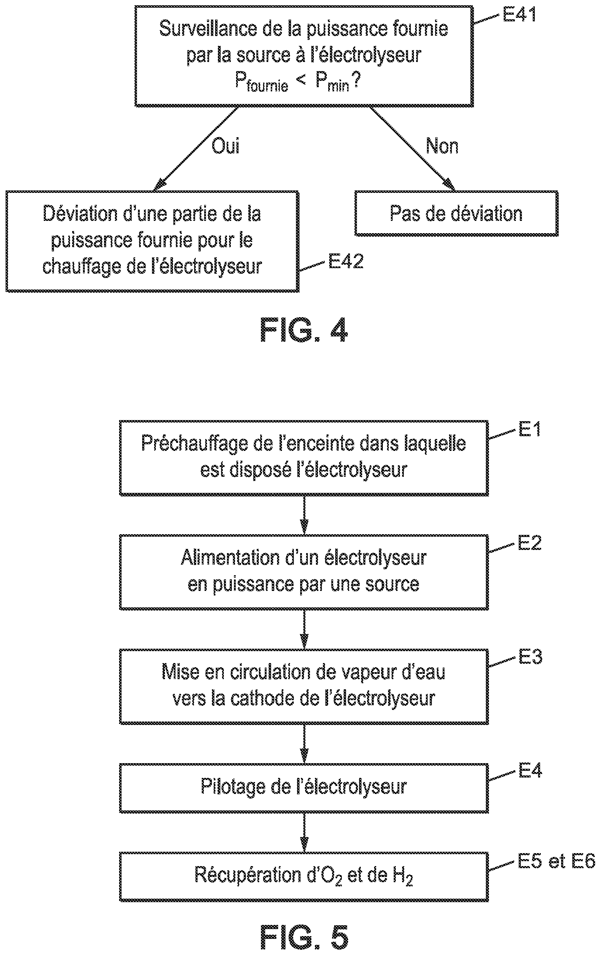

Un procédé de pilotage d'un électrolyseur à haute température dont le ou les empilements de cellules sont disposés dans une enceinte préalablement chauffée à une haute température, isolée thermiquement, l'électrolyseur étant relié à une source d'énergie pour son alimentation en puissance, est décrit ci-après en référence à la figure 4.

Ce procédé de pilotage peut être mis en oeuvre par le système de pilotage décrit ci-dessus faisant partie par exemple d'un système de production d'hydrogène également décrit ci-dessus.

Le procédé de pilotage comprend :

- la surveillance **E41** de la puissance fournie par la source d'énergie ;
- la déviation **E42** en amont de l'électrolyseur d'une partie de la puissance fournie par la source d'énergie pour le chauffage du ou des empilements de cellules, lorsque la valeur de la puissance fournie devient inférieure à une valeur limite préalablement déterminée.

Ainsi, grâce à un tel procédé, une partie de l'énergie apportée à l'empilement ou aux empilements de cellules est, dans certaines conditions, sous forme thermique et sa portion est directement dépendante de l'alimentation reçue de la source d'énergie. Ceci permet de réguler la température au sein de l'enceinte et ainsi d'éviter les gradients thermiques de plus de 50°C/cm, de préférence de plus de 20°C/cm, encore de préférence de plus de 10°C/cm, toujours de préférence de plus de 5°C/cm, à l'intérieur de l'enceinte.

En effet, l'énergie globale nécessaire pour permettre la réaction d'électrolyse peut être apportée par l'énergie électrique provenant d'une source électrique telle qu'une centrale électrique et/ou par l'énergie thermique provenant d'une source de chaleur.

Par ailleurs, lorsque de l'énergie électrique est apportée à l'empilement ou aux empilements de cellules, une partie est dissipée par effet Joule au niveau du ou des empilements de cellules sous forme de chaleur, contribuant aux besoins thermiques de la réaction d'électrolyse.

Ainsi, il est possible de couvrir entièrement les besoins de la réaction par apport de la source électrique uniquement si l'énergie dissipée compense entièrement les besoins en énergie thermique.

Dans le cas où le ou les empilements de cellules de l'électrolyseur sont disposés dans une enceinte isolée thermiquement et préalablement chauffée, comme il est prévu ici, si l'énergie nécessaire à la réaction est seulement apportée par une source électrique, trois modes de fonctionnement peuvent être identifiés selon la puissance apportée :

(a) le mode endothermique à faible puissance pour lequel l'énergie thermique dissipée par effet Joule est inférieure aux besoins thermiques de la réaction ;

(b) le mode thermoneutre pour lequel l'énergie thermique dissipée par effet Joule est égale à l'énergie thermique nécessaire à la réaction ; et

(c) le mode exothermique à forte puissance pour lequel l'énergie thermique dissipée par effet Joule est supérieure aux besoins thermiques de la réaction.

Dans le cas (b), la réaction d'électrolyse est en équilibre énergétique, il n'y a donc pas besoin d'autre apport d'énergie.

Dans le cas (a), la réaction d'électrolyse est déficitaire en énergie thermique, elle va donc consommer de l'énergie thermique disponible dans son environnement, c'est-à-dire la chaleur qui est disponible dans l'enceinte : il y a alors apparition de gradients thermiques à l'intérieur de l'enceinte.

Dans le cas (c), la réaction d'électrolyse est excédentaire en énergie thermique. Cet excédent va être évacué sous forme de chaleur provoquant des gradients thermiques à l'intérieur de l'enceinte.

Lorsque l'électrolyseur est relié à une source d'énergie renouvelable, le cas (a) est le plus préoccupant. En effet, pour résoudre le problème des gradients thermiques dans l'enceinte en mode exothermique, un dimensionnement de l'électrolyseur permet d'ajuster la puissance maximale de ce dernier avec la puissance maximale de la source d'énergie, ce qui permet de limiter les gradients thermiques qui y apparaitraient alors.

Pour le mode endothermique, une partie de la puissance fournie par la source d'énergie est déviée pour le chauffage additionnel du ou des empilements de cellules de l'électrolyseur, lorsque la valeur de la puissance fournie devient inférieure à une valeur limite préalablement déterminée.

En fonction du gradient thermique maximal tolérable par les empilements de cellules (50°C/cm, voire plus bas : 20°C/cm ; 10°C/cm ou 5°C/cm), la valeur limite préalablement déterminée est avantageusement choisie comme la valeur de la puissance à fournir pour que les gradients thermiques présents à l'intérieur de l'enceinte demeurent inférieurs à ce gradient thermique maximal tolérable, c'est-à-dire inférieurs à 50°C/cm, de préférence inférieurs à 20°C/cm, encore de préférence inférieurs à 10°C/cm, toujours de préférence inférieurs à 5°C/cm, si la déviation n'était pas mise en oeuvre. Cette puissance dépend de la configuration des empilements de cellules ainsi que des matériaux employés pour les éléments du ou des empilements.

La partie déviée est fonction du gradient de température maximal tolérable et de la puissance fournie par la source d'énergie.

Par exemple, les cellules de l'électrolyseur ayant une surface S, la distance entre l'entrée des gaz et la sortie des gaz dans une cellule étant L, la valeur limite $P_{min}$ par cellule est choisie égale à :

$$P_{min} = E(T_{min}) \cdot j(T_{min}) \cdot S \ ;$$

avec :

$$T_{min} = T_{eau} - \frac{L \cdot \Delta T}{2} \ ;$$

$$E(T) = E_N(T) + j(T) \cdot ASR \ ;$$

$$E_N(T) = \frac{\Delta_r G^0(T)}{2 \cdot F} + \frac{R \cdot T}{2 \cdot F} \cdot \ln\left(\frac{SC/2}{1 - SC/2}\right) \ ;$$

$$j(T) = \frac{A(T)}{2 \cdot F \cdot ASR} - \frac{E_N(T)}{ASR} \ ;$$

$$A(T) = \frac{L \cdot \Delta T}{2} \cdot \left( c_{p_{H2}}(2T - T_{eau}) + \frac{c_{p_{O2}}(2T - T_{eau})}{2} - \frac{c_{p_{H2O}}(T_{eau})}{SC} \right) + \Delta_r H(T) \ ;$$

où $T_{eau}$ la température de la vapeur d'eau entrant au niveau de la cathode ; $\Delta T$ le gradient de température maximal tolérable ; $c_{p_{H2}}$ la capacité thermique de l'hydrogène à pression constante ; $c_{p_{O2}}$ la capacité thermique de l'oxygène à pression constante ; $c_{p_{H2O}}$ la capacité thermique de l'eau à pression constante ; $\Delta_r H$ l'enthalpie de réaction de l'électrolyse de l'eau ; $\Delta_r G°$ l'enthalpie libre de réaction de l'électrolyse ; SC le taux de conversion de l'eau en hydrogène ; ASR la résistance spécifique de surface de ou des empilements de cellules ; F la constante de Faraday et R la constante des gaz parfaits.

Les capacités thermiques à pression constante ($C_p$), l'enthalpie de réaction ($\Delta_r H$) et l'enthalpie libre de réaction ($\Delta_r G°$) sont connues de tables de propriétés thermodynamiques.

Afin d'obtenir la valeur limite pour le ou les empilements de l'électrolyseur, il suffit de multiplier la valeur limite ci-dessus par le nombre de cellules.

Si la puissance apportée est contrôlée par le biais de la tension appliquée aux bornes de l'électrolyseur, la tension limite $E_{lim}$ est :

$$E_{min} = E_N(T_{min}) + j(T_{min}) \cdot ASR \ .$$

Lorsque la puissance fournie par la source d'énergie électrique est inférieure à cette puissance limite $P_{min}$, une partie de la puissance est déviée pour que la température moyenne dans l'enceinte soit maintenue à $T_{min}$.

La puissance déviée par cellule $P_{dév}$ peut être obtenue par itération des équations suivantes jusqu'à convergence en considérant comme valeurs initiales $P_{dév,0} = 0$ et $P_0 = P_{source}$, P étant la puissance appliquée à l'électrolyseur et $P_{source}$ la puissance provenant de la source électrique :

$$P_{dév,m+1} = A(T_{min}) \cdot \dot{n}_m(T_{min}) - P_m \ ;$$

avec :

$$\dot{n}_m(T) = \frac{S}{2 \cdot F} \cdot \left( -\frac{E_N(T)}{2 \cdot ASR} + \sqrt{\frac{P_m}{S \cdot ASR} + \left(\frac{E_N(T)}{2 \cdot ASR}\right)^2} \right) \ ;$$

$$P_m = P_{source} - P_{dév,m} \ ;$$

avec $m \geq 0$, m marquant le rang de l'itération.

Là encore, afin d'obtenir la puissance déviée pour le ou les empilements de l'électrolyseur, il suffit de multiplier la puissance déviée ci-dessus par le nombre de cellules.

Afin de s'assurer que les gradients de température à l'intérieur de l'enceinte restent à des valeurs tolérables, il est possible de ne prendre en compte que la différence de températures entre les gaz en entrée du ou des empilements et les gaz en sortie du ou des empilements. En effet, les gradients de température apparaissent principalement au niveau du ou des empilements.

Ainsi, si la distance entre l'entrée et la sortie des gaz dans une cellule est L, la vapeur d'eau entrant du côté des cathodes étant à une température de $T_{eau}$ et si $\Delta T$ représente le gradient de température maximal tolérable, alors la valeur limite de la puissance, en-deçà de laquelle la déviation est mise en place, est égale à la puissance pour laquelle la température $T_{sortie}$ des gaz en sortie du ou des empilements est égale à :

$$T_{sortie} = T_{eau} - \Delta T \cdot L.$$

La source d'énergie peut être une source d'énergie intermittente et/ou fluctuante. Une source d'énergie intermittente désigne une source dont la production d'énergie électrique est interrompue puis reprise par intervalles, c'est-à-dire que des périodes pendant lesquelles la production d'énergie est nulle alternent avec des périodes pendant lesquelles la production d'énergie n'est pas nulle. Une source d'énergie fluctuante désigne une source dont la production d'énergie électrique n'est pas fixée à une valeur constante.

La source d'énergie intermittente et/ou fluctuante est de préférence une source d'énergie renouvelable. Ainsi, il est possible d'utiliser une énergie renouvelable pour alimenter l'électrolyseur. Des exemples de telles sources ont été donnés ci-dessus. Ceci est possible grâce au procédé de pilotage qui permet de suivre la production d'énergie de ces sources d'énergie qui peut parfois descendre très bas.

Le procédé de pilotage que l'on vient de décrire peut être utilisé dans un procédé de production d'hydrogène. Un tel exemple est illustré par la figure 5 et comprend les étapes de :

- préchauffage **E1** à une haute température de l'enceinte isolée thermiquement dans laquelle le ou les empilements de cellules d'un électrolyseur à haute température sont disposés ;
- alimentation **E2** de l'électrolyseur en puissance à partir d'une source d'énergie ;
- mise en circulation **E3** de vapeur d'eau jusqu'aux cathodes de l'électrolyseur pour réaliser une réaction d'électrolyse ;
- pilotage **E4** de l'électrolyseur tel que décrit ci-dessus ;
- la récupération **E5** de l'oxygène généré par la réaction d'électrolyse au niveau de l'anode ;
- la récupération **E6** de l'hydrogène généré par la réaction d'électrolyse et de la vapeur d'eau non consommée au niveau de la cathode.

Avantageusement, l'enceinte est préalablement chauffée à une température comprise entre 300°C et 1000°C, de préférence entre 500°C et 1000°C, encore de préférence entre 700°C et 900°C, toujours de préférence autour de la température de la vapeur d'eau entrante. Quand les cellules (i.e. cathodes, anodes et électrolytes) sont en céramique, la température à laquelle l'enceinte est chauffée est de préférence entre 500°C et 1000°C, encore de préférence entre 700°C et 900 °C, toujours de préférence autour de la température de la vapeur d'eau entrante.

La température de la vapeur d'eau est typiquement comprise entre 300°C et 1000°C, préférentiellement entre 500°C et 1000°C, encore préférentiellement entre 700°C et 900°C. Quand les cellules sont en céramique, la température de la vapeur d'eau est de préférence entre 500°C et 1000°C, encore de préférence entre 700°C et 900°C.

Exemple

Dans l'exemple suivant, le procédé est décrit par rapport à la tension appliquée aux bornes de l'électrolyseur. L'enceinte est préalablement chauffée à 800°C. L'électrolyseur à haute température utilisé comprend des résistances électriques comme chauffe. La vapeur d'eau apportée aux cathodes est à 800°C. Le gradient thermique maximum tolérable entre l'entrée et la sortie de chaque cellule est de 10°C/cm en valeur absolue. Chaque cellule est de forme carrée avec un côté de 10 cm et une résistance spécifique de 0,5 $\Omega$.cm$^2$ (ohm centimètre carré).

Ainsi, la température des gaz à la sortie des cellules est limitée à 800 $\pm$ 100°C (100°C est le gradient thermique maximal tolérable d'un côté à un autre opposé d'une cellule), ce qui permettrait un fonctionnement de l'électrolyseur à une tension de 1,29 $\pm$ 0,03 V si le procédé de pilotage n'était pas mis en oeuvre. L'électrolyseur est dimensionné de manière à ce que la tension maximale soit égale à 1,32 V, ce qui correspond à une puissance maximale fournie par la source de 110 Watt. La valeur limite de la tension est fixée à 1,25 V.

En-deçà de cette valeur, une partie de la puissance fournie par la source d'énergie électrique est déviée vers les résistances électriques pour maintenir la température des gaz de sortie à 700°C ; ce qui permet de s'assurer que les gradients de température à l'intérieur d'une cellule demeurent inférieurs à 10°C/cm.

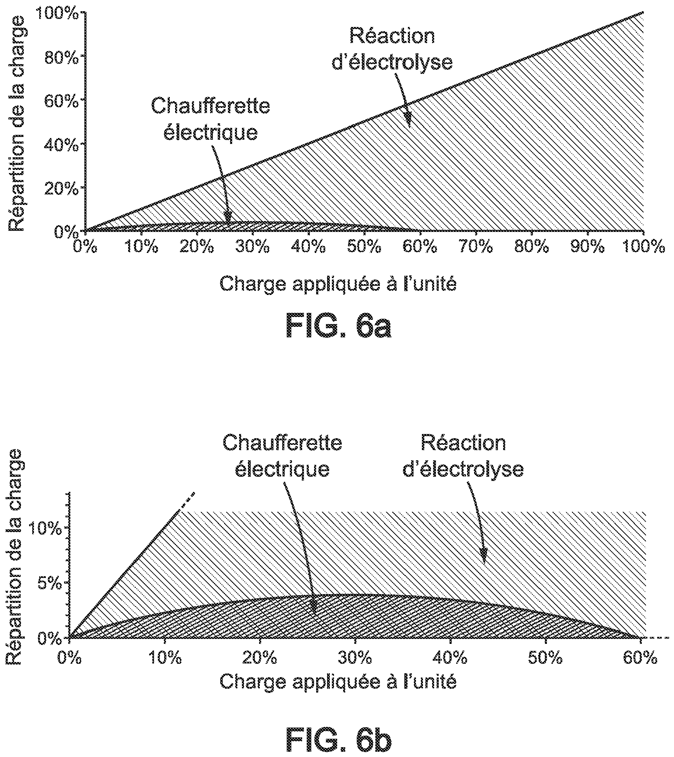

La répartition entre la partie de la puissance apportée à l'électrolyseur pour la réaction d'électrolyse et la partie de la puissance déviée vers les chaufferettes électriques est donnée par les figures 6a et 6b dont certaines valeurs sont reproduites dans le tableau 1 ci-dessous.

Tableau 1 : Répartition de la puissance fournie par la source d'énergie entre les empilements et la chauffe (* les pourcentages sont donnés par rapport à la puissance maximale fournie par la source, soit 110 W)

| Puissance fournie par la source (W) | Puissance fournie par la source (%*) | Partie de la puissance fournie aux empilements (%*) | Partie de la puissance fournie à la chauffe (%*) |
|---|---|---|---|
| 0 | 0 | 0 | 0 |
| 11 | 10 | 7,94 | 2,06 |
| 22 | 20 | 16,75 | 3,25 |
| 33 | 30 | 26,44 | 3,56 |
| 44 | 40 | 36,98 | 3,02 |
| 55 | 50 | 48,40 | 1,60 |
| 66 | 60 | 60 | 0 |
| 77 | 70 | 70 | 0 |
| 88 | 80 | 80 | 0 |
| 99 | 90 | 90 | 0 |
| 110 | 100 | 100 | 0 |

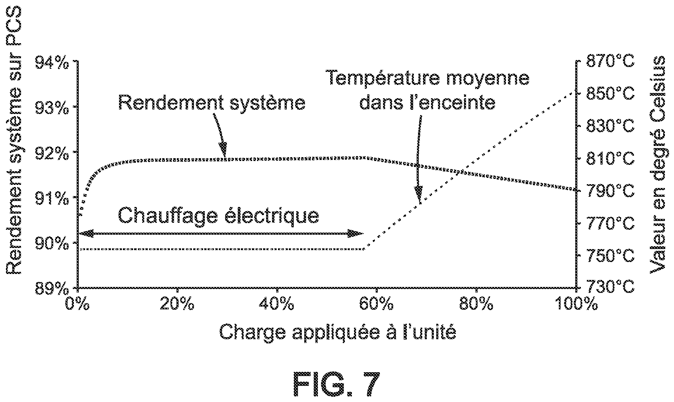

Un tel pilotage de l'électrolyseur n'a pas d'impact sur le rendement du système de production d'hydrogène dans son ensemble, comme illustré sur la figure 7, si l'on considère que le rendement des résistances électriques, placées dans l'enceinte, est de 100%. En effet, la figure 7 montre que le rendement du système est proche de 91,8% sur PCS (pouvoir calorifique supérieur) sur toute la plage de fonctionnement avec le chauffage électrique apporté par les résistances électriques.

Par ailleurs, la gamme de puissance dans laquelle l'électrolyseur peut fonctionner est étendue à 3-100% de la puissance maximale de l'électrolyseur, correspondant à un fonctionnement possible de l'électrolyseur à une tension comprise entre 1 V et 1,32 V .

## Revendications

1. Procédé de pilotage d'un électrolyseur à haute température comprenant un ou plusieurs empilements de cellules, le ou les empilements de cellules étant disposés dans une enceinte préalablement chauffée à haute température et isolée thermiquement, l'électrolyseur étant relié à une source d'énergie électrique pour son alimentation en puissance afin de réaliser une réaction d'électrolyse, le procédé comprenant :

   - la surveillance (E41) de la puissance fournie par la source d'énergie ;
   - la déviation (E42) en amont de l'électrolyseur d'une partie de la puissance fournie par la source d'énergie pour le chauffage du ou des empilements de cellules, lorsque la valeur de la puissance fournie devient inférieure à une valeur limite préalablement déterminée ;
   - pas de déviation sinon,

   dans lequel la valeur limite préalablement déterminée est choisie comme la valeur de la puissance à laquelle apparaissent des gradients de température à l'intérieur de l'enceinte supérieurs à 50°C/cm en valeur absolue.

2. Procédé selon la revendication 1, dans lequel les cellules de l'électrolyseur ayant une surface S, la distance entre l'entrée des gaz et la sortie des gaz dans une cellule étant L, la valeur limite $P_{min}$ par cellule est choisie égale à :

$$P_{min} = E(T_{min}) \cdot j(T_{min}) \cdot S \; ;$$

avec :

$$T_{min} = T_{eau} - \frac{L \cdot \Delta T}{2} \; ;$$

$$E(T) = E_N(T) + j(T) \cdot ASR \; ;$$

$$E_N(T) = \frac{\Delta_r G^0(T)}{2 \cdot F} + \frac{R \cdot T}{2 \cdot F} \cdot \ln\left(\frac{SC/2}{1 - SC/2}\right) \; ;$$

$$j(T) = \frac{A(T)}{2 \cdot F \cdot ASR} - \frac{E_N(T)}{ASR} \; ;$$

$$A(T) = \frac{L \cdot \Delta T}{2} \cdot \left( c_{p_{H2}}(2T - T_{eau}) + \frac{c_{p_{O2}}(2T - T_{eau})}{2} - \frac{c_{p_{H2O}}(T_{eau})}{SC} \right) + \Delta_r H(T) \; ;$$

où $T_{eau}$ la température de la vapeur d'eau entrant au niveau de la cathode ; $\Delta T$ le gradient de température maximal tolérable ; $c_{p_{H2}}$ la capacité thermique de l'hydrogène à pression constante ; $c_{p_{O2}}$ la capacité thermique de l'oxygène à pression constante ; $c_{p_{H2O}}$ la capacité thermique de l'eau à pression constante ; $\Delta_r H$ l'enthalpie de réaction de l'électrolyse de l'eau ; $\Delta_r G°$ l'enthalpie libre de réaction de l'électrolyse ; SC le taux de conversion de l'eau en hydrogène ; ASR la résistance spécifique de surface de ou des empilements de cellules ; F la constante de Faraday et R la constante des gaz parfaits.

**3.** Procédé selon la revendication 2, dans lequel la puissance déviée est obtenue par itération des équations suivantes jusqu'à convergence en considérant comme valeurs initiales $P_{dév,0} = 0$ et $P_0 = P_{source}$ :

$$P_{dév,m+1} = A(T_{min}) \cdot \dot{n}_m(T_{min}) - P_m \; ;$$

avec :

$$\dot{n}_m(T) = \frac{S}{2 \cdot F} \cdot \left( -\frac{E_N(T)}{2 \cdot ASR} + \sqrt{\frac{P_m}{S \cdot ASR} + \left(\frac{E_N(T)}{2 \cdot ASR}\right)^2} \right) \; ;$$

$$P_m = P_{source} - P_{dév,m} \; ;$$

avec $m \geq 0$, m marquant le rang de l'itération.

**4.** Procédé selon la revendication 1, dans lequel, la distance entre l'entrée et la sortie des gaz dans une cellule étant L, la vapeur d'eau entrant du côté des cathodes étant à une température de $T_{eau}$ et $\Delta T$ représentant le gradient de température maximal tolérable, alors la valeur limite de la puissance en-deçà de laquelle la déviation est mise en place est égale à la puissance pour laquelle la température $T_{sortie}$ des gaz en sortie du ou des empilements est égale à :

$$T_{sortie} = T_{eau} - \Delta T \cdot L.$$

**5.** Procédé selon l'une des revendications 1 à 4, dans lequel la source d'énergie est une source d'énergie intermittente et/ou fluctuante.

**6.** Procédé selon la revendication 5, dans lequel la source d'énergie est une source d'énergie renouvelable.

**7.** Procédé de production d'hydrogène ou de syngas comprenant les étapes de :

- préchauffage (E1) à une haute température d'une enceinte isolée thermiquement dans laquelle le ou les empilements d'un électrolyseur à haute température sont disposés ;
- alimentation (E2) de l'électrolyseur en puissance à partir d'une source d'énergie ;
- mise en circulation (E3) d'eau jusqu'aux cathodes de l'électrolyseur pour réaliser une réaction d'électrolyse ;
- pilotage (E4) de l'électrolyseur selon le procédé de pilotage de l'une des revendications 1 à 6 ;
- la récupération (E5) de l'oxygène généré par la réaction d'électrolyse au niveau des anodes ;
- la récupération (E6) de l'hydrogène généré par la réaction d'électrolyse au niveau des cathodes et éventuellement du monoxyde de carbone dans le cas de la production de syngas.

**8.** Procédé selon la revendication 7, dans lequel la haute température est comprise entre 300°C et 1000°C.

**9.** Système (1) de pilotage d'un électrolyseur à haute température pour la mise en oeuvre du procédé selon l'une quelconque des revendications 1 à 8, comprenant un ou plusieurs empilements de cellules disposés dans une enceinte préalablement chauffée à une haute température, isolée thermiquement, l'électrolyseur étant alimenté par une source d'énergie, comprenant :

- une chauffe (11) à relier à la source d'énergie pour son alimentation en puissance et à disposer au voisinage du ou des empilements de cellules pour le chauffage de celui-ci ou de ceux-ci ;
- un commutateur (12) à disposer entre la source d'énergie et la chauffe (11) pour la coupure ou le réglage de l'alimentation de celle-ci lorsque la valeur de la puissance fournie devient inférieure à une valeur limite préalablement déterminée;
- un contrôleur (13) à relier à la source d'énergie pour le suivi de la puissance fournie par celle-ci et connecté au commutateur (12) pour la commande de celui-ci,
dans lequel la valeur limite préalablement déterminée est choisie comme la valeur de la puissance à laquelle apparaissent des gradients de température à l'intérieur de l'enceinte supérieurs à 50°C/cm en valeur absolue.

**10.** Système (1) selon la revendication 9, dans lequel la chauffe (11) comprend une ou plusieurs résistances électriques disposées à l'intérieur du ou des empilements de cellules ou autour de ceux-ci.

**11.** Système (10) de production d'hydrogène ou de syngas comprenant :

- un électrolyseur (2) à haute température ;
- une source (3) d'énergie reliée à l'électrolyseur (2) pour l'alimentation de l'électrolyseur en puissance ;
- une enceinte (4) isolée thermiquement dans laquelle le ou les empilements de cellules de l'électrolyseur sont disposés ; et
- un système (1) de pilotage de l'électrolyseur alimenté par la source (3) d'énergie, selon la revendication 9 ou la revendication 10.

**Patentansprüche**

**1.** Verfahren zur Steuerung eines Hochtemperatur-Elektrolyseurs, umfassend einen oder mehrere Zellenstapel, wobei der oder die Zellenstapel in einer Hülle angeordnet sind, die zuvor auf eine hohe Temperatur erhitzt wird und thermisch isoliert wird, wobei der Elektrolyseur mit einer elektrischen Energiequelle für seine Versorgung mit Leistung verbunden ist, um eine Elektrolysereaktion durchzuführen, wobei das Verfahren umfasst:

- die Überwachung (E41) der Leistung, die von der Energiequelle geliefert wird;
- die Umleitung (E42), stromaufwärts von dem Elektrolyseur, eines Teils der Leistung, die von der Energiequelle geliefert wird, für das Erhitzen des oder der Zellenstapel, wenn der Wert der gelieferten Leistung niedriger wird als ein zuvor bestimmter Grenzwert;
- ansonsten keine Umleitung,

wobei der zuvor bestimmte Grenzwert als Wert der Leistung ausgewählt wird, bei der Temperaturgradienten im Inneren der Hülle von mehr als 50 °C/cm als Absolutwert auftreten.

**2.** Verfahren nach Anspruch 1,
wobei die Zellen des Elektrolyseurs eine Oberfläche S aufweisen, die Distanz zwischen dem Eingang von Gasen und dem Ausgang von Gasen in einer Zelle L ist, der Grenzwert $P_{min}$ pro Zelle ausgewählt wird gleich:

$$P_{min} = E(T_{min}) \cdot j(T_{min}) \cdot S \; ;$$

wobei:

$$T_{min} = T_{eau} - \frac{L \cdot \Delta T}{2} \; ;$$

$$E(T) = E_N(T) + j(T) \cdot ASR \; ;$$

$$E_N(T) = \frac{\Delta_r G^0(T)}{2 \cdot F} + \frac{R \cdot T}{2 \cdot F} \cdot \ln\left(\frac{SC/2}{1 - SC/2}\right) \; ;$$

$$j(T) = \frac{A(T)}{2 \cdot F \cdot ASR} - \frac{E_N(T)}{ASR} \; ;$$

$$A(T) = \frac{L \cdot \Delta T}{2} \cdot \left( c_{p_{H2}} (2T - T_{eau}) + \frac{c_{p_{O2}} (2T - T_{eau})}{2} - \frac{c_{p_{H2O}} (T_{eau})}{SC} \right) + \Delta_r H(T) \; ;$$

wobei $T_{eau}$ die Temperatur des Wasserdampfs ist, der auf der Höhe der Kathode eintritt; $\Delta T$ der maximale tolerierbare Temperaturgradient ist; $C_{PH2}$ die thermische Kapazität von Wasserstoff bei konstantem Druck ist; $C_{PO2}$ die thermische Kapazität von Sauerstoff bei konstantem Druck ist; $C_{H2O}$ die thermische Kapazität von Wasser bei konstantem Druck ist; $\Delta_r H$ die Enthalpie der Reaktion der Elektrolyse des Wassers ist; $\Delta_r G°$ die freie Enthalpie der Reaktion der Elektrolyse ist; SC die Umwandlungsrate von Wasser in Wasserstoff ist; ASR der spezifische Widerstand der Oberfläche des oder der Zellenstapel ist; F die Faraday-Konstante ist, und R die ideale Gaskonstante ist.

**3.** Verfahren nach Anspruch 2,
wobei die umgeleitete Leistung durch Iteration der folgenden Gleichungen bis zur Konvergenz erhalten wird, indem als Initialwerte $P_{dév,0} = 0$ und $P_0 = P_{source}$ berücksichtigt werden:

$$P_{dév,m+1} = A(T_{min}) \cdot \dot{n}_m(T_{min}) - P_m \; ;$$

wobei:

$$\dot{n}_m(T) = \frac{S}{2 \cdot F} \cdot \left( -\frac{E_N(T)}{2 \cdot ASR} + \sqrt{\frac{P_m}{S \cdot ASR} + \left(\frac{E_N(T)}{2 \cdot ASR}\right)^2} \right) ;$$

$$P_m = P_{source} - P_{dév,m} ;$$

wobei $m \geq 0$, wobei m den Iterationsrang markiert.

4. Verfahren nach Anspruch 1,
wobei die Distanz zwischen dem Eingang und dem Ausgang der Gase in einer Zelle L ist, der Wasserdampf, der von der Seite der Kathoden eintritt, eine Temperatur von $T_{eau}$ aufweist, und $\Delta T$ den maximalen tolerierbaren Temperaturgradienten darstellt, daher der Grenzwert der Leistung, unter welchem die Umleitung vorgenommen wird, gleich der Leistung ist, für welche die Temperatur $T_{sortie}$ der Gase am Ausgang des oder der Stapel gleich ist:

$$T_{sortie} = T_{eau} - \Delta T \cdot L.$$

5. Verfahren nach einem der Ansprüche 1 bis 4,
wobei die Energiequelle eine intermittierende und/oder fluktuierende Energiequelle ist.

6. Verfahren nach Anspruch 5,
wobei die Energiequelle eine erneuerbare Energiequelle ist.

7. Verfahren zur Herstellung von Wasserstoff oder von Syngas, umfassend die Schritte:

   - Vorerhitzen (E1) einer thermisch isolierten Hülle auf eine hohe Temperatur, in welcher der oder die Stapel eines Hochtemperatur-Elektrolyseurs angeordnet sind;
   - Versorgen (E2) des Elektrolyseurs mit Leistung von einer Energiequelle;
   - Zirkulieren (E3) von Wasser bis zu den Kathoden des Elektrolyseurs, um eine Elektrolysereaktion durchzuführen;
   - Steuern (E4) des Elektrolyseurs gemäß dem Steuerverfahren nach einem der Ansprüche 1 bis 6;
   - Gewinnen (E5) von Sauerstoff, der durch die Elektrolysereaktion auf der Höhe der Anoden erzeugt wird;
   - Gewinnen (E6) von Wasserstoff, der durch die Elektrolysereaktion auf der Höhe der Kathoden erzeugt wird, und gegebenenfalls von Kohlenmonoxid in dem Fall der Erzeugung von Syngas.

8. Verfahren nach Anspruch 7,
wobei die hohe Temperatur zwischen 300 °C und 1000 °C liegt.

9. System (1) zur Steuerung eines Hochtemperatur-Elektrolyseurs zur Durchführung des Verfahrens nach einem der Ansprüche 1 bis 8, umfassend einen oder mehrere Zellenstapel, welche in einer Hülle angeordnet sind, die zuvor auf eine hohe Temperatur erhitzt wird und thermisch isoliert wird, wobei der Elektrolyseur von einer elektrischen Energiequelle versorgt wird, umfassend:

   - einen Heizer (11), der mit der Energiequelle für seine Versorgung mit Leistung zu verbinden ist und in der Nähe des oder der Zellenstapel anzuordnen ist, um diesen oder diese zu erhitzen;
   - einen Schalter (12), der zwischen der Energiequelle und dem Heizer (11) anzuordnen ist, um die Versorgung desselben zu trennen oder zu regeln, wenn der Wert der gelieferten Leistung niedriger wird als ein zuvor bestimmter Grenzwert;
   - eine Steuereinheit (13), die mit der Energiequelle zu verbinden ist, um die von dieser gelieferte Leistung zu überwachen, und die mit dem Schalter (12) verbunden ist, um diesen zu steuern; wobei der zuvor bestimmte Grenzwert als Wert der Leistung ausgewählt wird, bei der Temperaturgradienten im Inneren der Hülle von mehr als 50 °C/cm als Absolutwert auftreten.

10. System (1) nach Anspruch 9,
wobei der Heizer (11) einen oder mehrere elektrische Widerstände umfasst, die im Inneren des oder der Zellenstapel oder um diese angeordnet sind.

**11.** System (10) zur Erzeugung von Wasserstoff oder von Syngas, umfassend:

- einen Hochtemperatur-Elektrolyseur (2);
- eine Energiequelle (3), die mit dem Elektrolyseur (2) verbunden ist, um den Elektrolyseur mit Leistung zu versorgen;
- eine thermisch isolierte Hülle (4), in welcher der oder die Zellenstapel des Elektrolyseurs angeordnet sind; und
- ein System (1) zur Steuerung des Elektrolyseurs, der von der Energiequelle (3) versorgt wird, nach Anspruch 9 oder Anspruch 10.

**Claims**

**1.** Process for driving a high temperature electrolyzer comprising one or more stacks of cells, where the one or more stacks of cells are arranged in an enclosure pre-heated to a high temperature and thermally insulated, where the electrolyzer is connected to an electric energy source for its power supply in order to implement an electrolytic reaction and where the process comprises:

- Monitoring (E41) of the power supplied by the energy source;
- Redirecting (E42) upstream of the electrolyzer a portion of the power supplied by the energy source in order to heat the one or more stacks of cells when the value of the power supplied becomes lower than a previously set limit value;
- otherwise, no redirecting,

wherein the previously set limit value is chosen as the value of the power at which thermal gradients greater in absolute value than 50°C/cm appear inside the enclosure.

**2.** Process according to claim 1, wherein the electrolyzer cells have a surface area S and the distance between the inlet of the gases and the outlet of the gases in a cell is L, the limit value $P_{min}$ per cell is chosen equal to:

$$P_{min} = E(T_{min}) \cdot j(T_{min}) \cdot S \, ;$$

with:

$$T_{min} = T_{water} - \frac{L \cdot \Delta T}{2} \, ;$$

$$E(T) = E_N(T) + j(T) \cdot ASR \, ;$$

$$E_N(T) = \frac{\Delta_r G^0(T)}{2 \cdot F} + \frac{R \cdot T}{2 \cdot F} \cdot \ln\left(\frac{SC/2}{1 - SC/2}\right);$$

$$j(T) = \frac{A(T)}{2 \cdot F \cdot ASR} - \frac{E_N(T)}{ASR} \, ;$$

$$A(T) = \frac{L \cdot \Delta T}{2} \cdot \left( c_{p_{H2}} (2T - T_{water}) + \frac{c_{p_{O2}} (2T - T_{water})}{2} - \frac{c_{p_{H2O}} (T_{water})}{SC} \right) + \Delta_r H(T) \, ;$$

where $T_{water}$ is the temperature of the steam entering near the cathode; $\Delta T$ is the maximum tolerable temperature

gradient; $C_{p_{H_2}}$ is the thermal capacity of the hydrogen at constant pressure; $C_{p_{O_2}}$ is the thermal capacity of the oxygen at constant pressure; $C_{p_{H_2O}}$ is the thermal capacity of the water at constant pressure; $\Delta_r H$ is the enthalpy of reaction of the electrolysis of water; $\Delta_r G$ is the free enthalpy of reaction of the electrolysis; SC is the rate of conversion of water into hydrogen; ASR is the resistivity of the surface of one or more stacks of cells; F is the Faraday constant; and R is the ideal gas constant.

3. Process according to claim 2, wherein the redirected power is obtained by iteration of the following equations until convergence by taking $P_{red,0} = 0$ and $P_0 = P_{source}$ as initial values:

$$P_{red,m+1} = A(T_{\min}) \cdot \dot{n}_m(T_{\min}) - P_m ;$$

with:

$$\dot{n}_m(T) = \frac{S}{2 \cdot F} \cdot \left( -\frac{E_N(T)}{2 \cdot ASR} + \sqrt{\frac{P_m}{S \cdot ASR} + \left(\frac{E_N(T)}{2 \cdot ASR}\right)^2} \right) ;$$

$$P_m = P_{source} - P_{red,m} ;$$

with $m \geq 0$ greater than or equal to 0; m indicating the order of the iteration.

4. Process according to claim 1, wherein the L is the distance between the inlet and the outlet of the gases in a cell, where the steam entering from the side of the cathodes is at a temperature $T_{water}$ and $\Delta T$ represents the maximum tolerable temperature gradient, then the limit value of the power below which the redirect is implemented is equal to the power for which the temperature $T_{outlet}$ of the gases at the outlet of the one or more stacks is equal to:

$$T_{outlet} = T_{water} - \Delta T \cdot L.$$

5. Process according to one of claims 1 to 4, wherein the energy source is an intermittent and/or fluctuating energy source.

6. Process according to claim 5, wherein the energy source is a renewable energy source.

7. Process for production of hydrogen or syngas comprising the steps of:

- Preheating (E1) a thermally insulated enclosure, in which the one or more stacks of a high temperature electrolyzer are arranged, to a high temperature;
- Supplying (E2) the electrolyzer with power from an energy source;
- Circulating (E3) water to the cathodes of the electrolyzer to implement an electrolytic reaction;
- Driving **E4** the electrolyzer according to the driving process from one of claims 1 to 6;
- Recovering (E5) near the anodes the oxygen generated by the electrolytic reaction;
- Recovering (E6) near the cathodes the hydrogen generated by the electrolytic reactions and possibly the carbon monoxide in the case of syngas production.

8. Process according to claim 7, wherein the high temperature is included between 300°C and 1000°C.

9. System (1) for driving a high temperature electrolyzer for the implementation of the method according to anyone of claims 1 to 8, comprising one or more stacks of cells arranged in an enclosure pre-heated to a high temperature and thermally insulated, where the electrolyzer is supplied by an energy source, comprising:

- A heater (11) to be connected to the energy source for supplying it with power and to be arranged near the one or more stacks of cells for heating thereof;

- A switch (12) to be arranged between the energy source and the heater (11) for cutting or adjusting the supply thereto when the value of the power supplied becomes lower than a previously set limit value;

- A controller (13) to be connected to the energy source in order to monitor the power provided thereby and connected (12) to the switch for the control thereof,

wherein the previously set limit value is chosen as the value of the power at which thermal gradients greater in absolute value than 50°C/cm appear inside the enclosure.

10. System (1) according to claim 9, wherein the heater (11) includes one or more electrical resistance is arranged inside of the one or more stacks of cells or around the stacks.

11. System (10) for production of hydrogen or syngas comprising:

- A high temperature electrolyzer (2);
- An energy source (3) connected to the electrolyzer (2) for supplying the electrolyzer with power;
- A thermally insulated enclosure (4) in which the one or more stacks of cells of the electrolyzer are arranged; and
- a system (1) for driving the electrolyzer supplied by the energy source (3), according to claim 9 or claim 10.

**FIG. 1**

**FIG. 2**

FIG. 3

EP 3 060 700 B1

Surveillance de la puissance fournie
par la source à l'électrolyseur
$P_{fournie} < P_{min}$ ? — E41

Oui

Non

Déviation d'une partie de la
puissance fournie pour le
chauffage de l'électrolyseur — E42

Pas de déviation

**FIG. 4**

Préchauffage de l'enceinte dans laquelle
est disposé l'électrolyseur — E1

Alimentation d'un électrolyseur
en puissance par une source — E2

Mise en circulation de vapeur d'eau
vers la cathode de l'électrolyseur — E3

Pilotage de l'électrolyseur — E4

Récupération d'$O_2$ et de $H_2$ — E5 et E6

**FIG. 5**

21

**FIG. 6a**

**FIG. 6b**

FIG. 7

**EP 3 060 700 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013060869 A
- FR 2921390
- US 20090325014 A